# EUROPEAN PATENT SPECIFICATION

(11) **EP 3 677 466 B1**
(45) Date of publication and mention of the grant of the patent: **18.08.2021**
(21) Application number: 17922993.5
(22) Date of filing: 31.08.2017
(51) Int. Cl.: B60L 53/30, B62J 23/00, B62H 5/00, B62J 6/00, B62J 99/00, E05B 83/28, B60L 50/60, B60L 53/16, B62M 6/40, B62M 6/45

(54) **ELECTRIC SADDLED VEHICLE**
ELEKTRISCHES SATTELFAHRZEUG
VÉHICULE ÉLECTRIQUE À SELLE

(43) Date of publication of application: 08.07.2020
(73) Proprietor: Yamaha Hatsudoki Kabushiki Kaisha, Iwata-shi, Shizuoka 438-8501 (JP)
(72) Inventor: MUROTA, Naoki, Iwata-shi Shizuoka 438-8501 (JP); GOTO, Shintaro, Iwata-shi Shizuoka 438-8501 (JP); MURAMATSU, Yasuyuki, Iwata-shi Shizuoka 438-8501 (JP); SHIMIZU, Tsukasa, Iwata-shi Shizuoka 438-8501 (JP); NAKAI, Kazuhiko, Iwata-shi Shizuoka 438-8501 (JP)
(74) Representative: Grünecker Patent- und Rechtsanwälte PartG mbB
(86) International application number: PCT/JP2017/031382
(87) International publication number: WO 2019/043880

(56) References cited:
- EP-A1- 2 799 276
- WO-A1-2013/098902
- WO-A1-2013/137029
- JP-A- 2011 063 074
- JP-A- 2012 176 697
- JP-A- 2016 223 256
- US-B2- 8 753 136

## Description

This invention relates to an electric saddled vehicle according to the preamble of independent claim 1. Such an electric saddled vehicle can be taken from the prior art document EP 2 799 276 A1.

An electric motorcycle has an electric motor and a battery that stores power supplied to the electric motor. Some electric motorcycles have charge inlets (for example, Patent Literature 1) . A connector (charge gun) of a cable extending from an external charger is connected to the charge inlet. An openable and closable lid is provided on the charge inlet. The lid is normally locked in a closed position and a user may release the lock by key operation or button operation.

### Citation List

### Patent Literature

Patent Literature 1: JP 2011-63074 A

In an electric vehicle of related art, there is a key system (e.g. a key cylinder or button) specializing for operation of the lock of the lid of the charge inlet. Accordingly, a user may suffer inconvenience. For example, a user of a vehicle having the key cylinder is required to reinsert a key into the key cylinder for the charge inlet from a key cylinder which has a main switch for the vehicle.

It is the object of the present invention to provide an electric saddled vehicle which makes charging work of a battery easier. According to the present invention said object is solved by an electric saddled vehicle having the features of independent claim 1. Preferred embodiments are laid down in the dependent claims.
(1) An aspect of an electric saddled vehicle includes an electric motor that drives a driving wheel, a battery that stores power to be supplied to the electric motor, a controller that controls the electric motor, a charge inlet electrically connected to the battery, an openable and closable inlet lid provided on the charge inlet, a lock mechanism for locking the inlet lid in a closed position, and a key system. The key system has a switch for switching the controller from an off-state to an on-state according to a first operation by a user and is configured to release lock of the inlet lid by the lock mechanism according to a second operation by the user.
   According to the electric saddled vehicle, the key system for switching the controller between the on-state and the off-state releases the lock of the inlet lid by the lock mechanism. Therefore, the user may release the lock by the lock mechanism by simpler operation than that in related art, and the charging work of the battery may be made easier.
(2) In the electric saddled vehicle of (1), the key system may have a key cylinder for insertion of a key. A first position in which the controller is in the on-state, a second position in which the controller is in the off-state, and a third position in which the lock of the inlet lid by the lock mechanism is released may be defined in the key cylinder.
(3) In the electric saddled vehicle of (2), the second position may be set between the third position and the first position. The user may be prevented from erroneously placing the key cylinder in the third position in which the lock of the inlet lid is released.
(4) The electric saddled vehicle of (1) may further include an illumination device for illuminating the charge inlet. The illumination device may be turned on according to the second operation or an opening action of the inlet lid. Thereby, the charging work in a dark place may be made easier.
(5) In the electric saddled vehicle of (4), the illumination device may be automatically turned off. Thereby, waste of power consumption may be prevented.
(6) In the electric saddled vehicle of (5), the illumination device may be turned off after a predetermined time elapses from the start of lighting or according to a closing action of the inlet lid. Thereby, waste of power consumption may be prevented.

### Brief Description of Drawings

[FIG. 1]

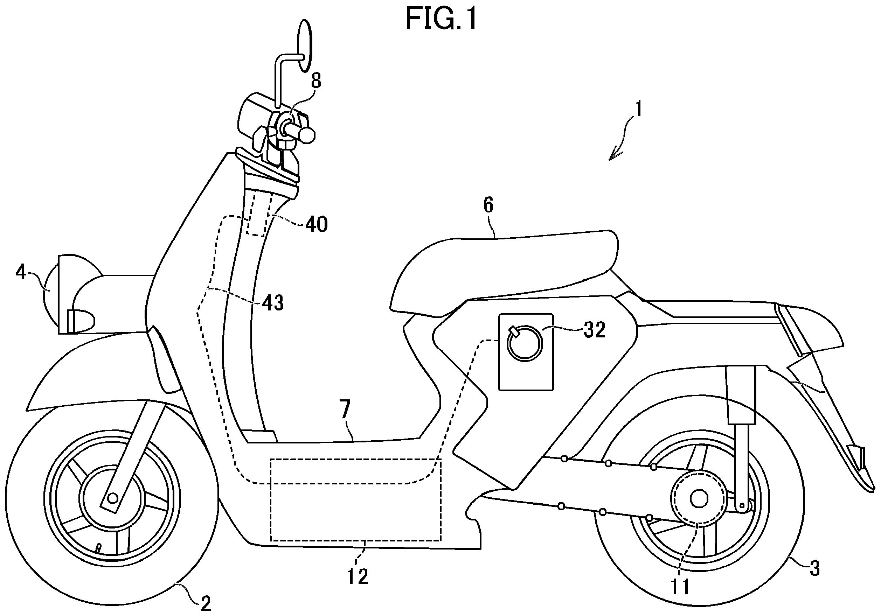

   FIG. 1 is a side view showing an electric motorcycle as an exampled electric saddled vehicle proposed in this disclosure.
[FIG. 2]

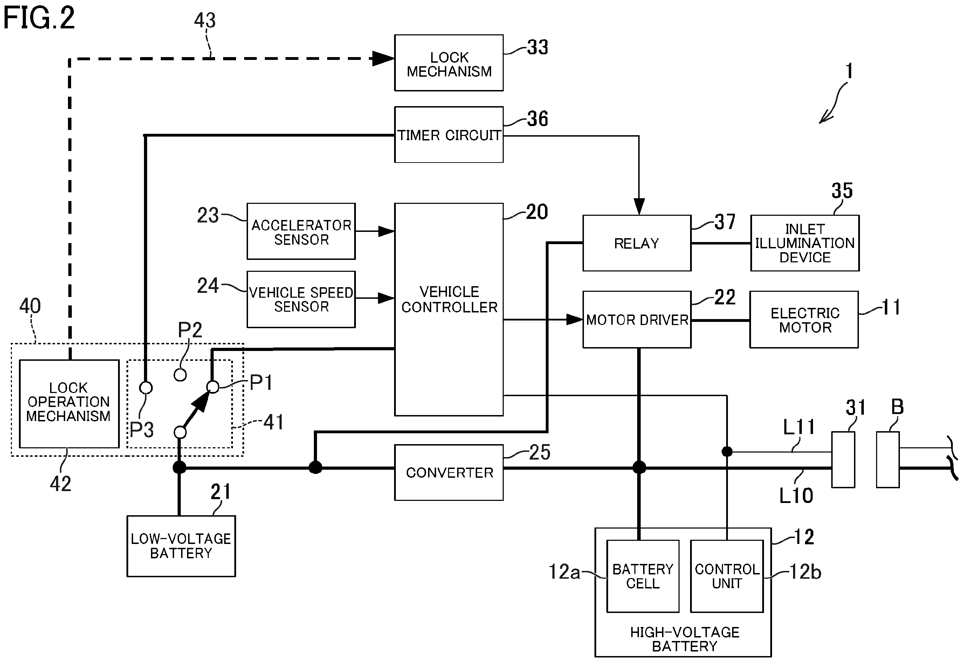

   FIG. 2 is a block diagram showing an exampled electric motorcycle.
[Fig. 3]

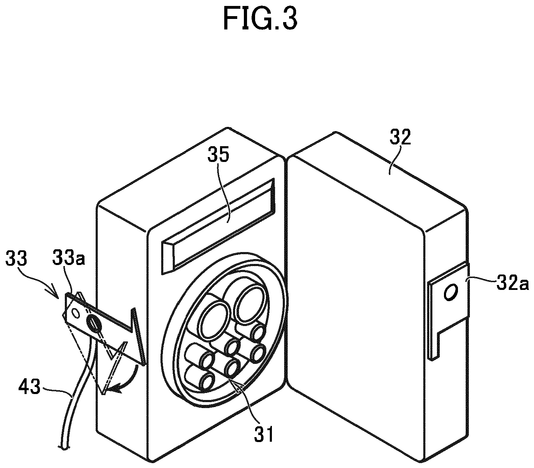

   FIG. 3 is a perspective view showing an example of a charge inlet.
[FIG. 4]

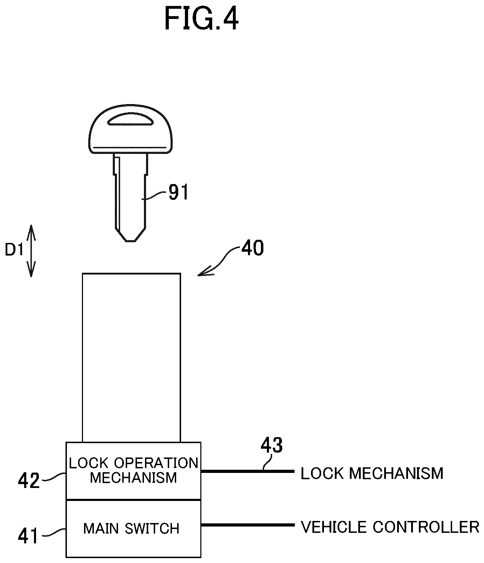

   FIG. 4 is a schematic diagram of a key cylinder.
[FIG. 5]

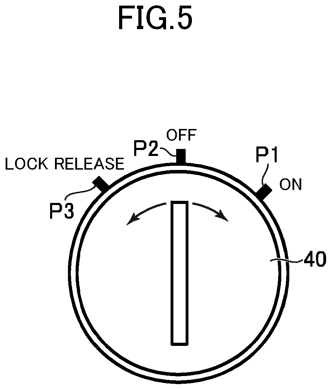

   FIG. 5 is a plan view of the key cylinder shown in FIG. 4.

### Description of Embodiments

As below, an exampled electric saddled vehicle proposed in this disclosure will be explained. The electric saddled vehicle includes e.g. an electric motorcycle, an electric irregular terrain vehicle (electric four-wheel vehicle), and an electric snow vehicle. Here, an electric motorcycle will be explained as the exampled electric saddled vehicle.

As shown in FIG. 1, an electric motorcycle 1 has a front wheel 2 and a rear wheel 3. The front wheel 2 is coupled to a steering handle 8 via a steering shaft (not shown) and rotates to right and left according to operation of the steering handle 8. As will be described later, in the exampled electric motorcycle 1, a key cylinder 40 is placed near the steering handle 8, more specifically, below the steering handle 8.

As shown in FIG. 2, the electric motorcycle 1 has an electric motor 11 that drives the driving wheel (specifically, the rear wheel 3), and a battery 12 that stores power for the electric motor 11. The torque of the electric motor 11 may be transmitted to the rear wheel 3 via a torque transmission mechanism including a gear and a belt. The electric motor 11 may be provided in the front wheel 2 for driving the front wheel. The electric motor 11 is an alternating-current motor (e.g. magnetic synchronous motor), however, the type of the electric motor 11 is not limited to that, but may be e.g. a direct-current motor.

The battery 12 is e.g. a lithium-ion battery, nickel-hydride storage battery, or lead storage battery. In the example of FIG. 1, the battery 12 is placed under a footboard 7 for a rider to rest feet thereon, however, the placement of the battery 12 is not limited to the example of FIG. 1, but may be appropriately changed. The battery 12 may be placed below a seat 6, for example. The number of batteries 12 may be one, two, or more. Further, the battery 12 may be configured to be detachable from the vehicle body. That is, the electric motorcycle 1 may have a battery case housing the battery 12 and being openable and closable. As shown in FIG. 2, the battery 12 has a battery cell 12a and a control unit 12b including a CPU and a memory. The control unit 12b can communicate with a vehicle controller 20, which will be described later. Further, the control unit 12b monitors the battery cell 12a. The control unit 12b allows discharge of the battery cell 12a and restrict the discharge according to a state (temperature) of the battery cell 12a and a command from the vehicle controller 20.

The electric motorcycle 1 has a motor driver 22 (see FIG. 2). The motor driver 22 receives power from the battery 12 and supplies the drive power to the electric motor 11. More specifically, the motor driver 22 includes an inverter, and converts a direct current received from the battery 12 into an alternating current and supplies the current to the electric motor 11. The electric motorcycle 1 has the vehicle controller 20 including a memory and a CPU (see FIG. 2). The vehicle controller 20 controls the electric motor 11. For example, the vehicle controller 20 calculates a command value based on a manipulated amount of an accelerator grip (accelerator manipulated amount) sensed by an accelerator sensor 23 and a vehicle speed sensed by a vehicle speed sensor 24. The motor driver 22 supplies a current according to the command value to the electric motor 11. The method of controlling the electric motor 11 by the vehicle controller 20 is not limited to the above described example.

As shown in FIG. 2, the electric motorcycle 1 has a battery 21 for supplying power to various electric components of the vehicle. The battery 21 has an output voltage lower than the battery 12 (hereinafter, the battery 12 is referred to as "high-voltage battery" and the battery 21 is referred to as "low-voltage battery"). The electric components include e.g. the vehicle controller 20 and a lighting device (e.g. headlight 4 (see FIG. 1)). The low-voltage battery 21 is connected to the high-voltage battery 12 via a converter 25 and charged by the power received from the high-voltage battery 12.

As shown in FIG. 2, the electric motorcycle 1 has a charge inlet 31 for charging the high-voltage battery 12. When the high-voltage battery 12 is charged, an end portion (connector B for charge) of a cable extending from an external charger is connected to the charge inlet 31. The external charger is e.g. a charger of a charge station placed along a road or a charger connected to a household power supply. The charge inlet 31 is connected to the high-voltage battery 12. That is, the charge inlet 31 has charging terminals. The charging terminals are connected to the battery cell 12a of the high-voltage battery 12 via a power line L10. Further, the charge inlet 31 has a signal terminal. The signal terminal is connected to the control unit 12b of the high-voltage battery 12 and/or the vehicle controller 20 via a signal line L11. When the high-voltage battery 12 is charged, the external charger communicates with the control unit 12b of the high-voltage battery 12, and starts charging and stops charging according to commands and information received from the control unit 12b (e.g. information on the battery cell 12a).

As shown in FIG. 1, an openable and closable inlet lid 32 is provided on the charge inlet 31. The inlet lid 32 in a closed position covers the charge inlet 31 and the inlet lid 32 in an opened position exposes the charge inlet 31. The inlet lid 32 is supported by e.g. a hinge (not shown) so as to be openable and closable. In the example of FIG. 1, the inlet lid 32 and the charge inlet 31 are located below the seat 6 and placed to face the lateral side, however, the placement is not limited to the example of FIG. 1.

The electric motorcycle 1 has a lock mechanism 33 (see FIG. 2) for locking the inlet lid 32 in the closed position. That is, the lock mechanism 33 restricts the movement of the inlet lid 32 from the closed position to the opened position. The lock mechanism 33 has an engaging member 33a (see FIG. 3). The engaging member 33a is movable between an engagement position and a non-engagement position. The engaging member 33a in the engagement position engages with an engaged portion 32a (see FIG. 3) of the inlet lid 32 and locks the inlet lid 32 in the closed position. When the engaging member 33a is in the non-engagement position, the engagement between the engaging member 33a and the engaged portion 32a is released and the movement of the inlet lid 32 to the opened position is allowed. The engaging member 33a may be slidable between the engagement position and the non-engagement position or rotatable between the engagement position and the non-engagement position.

The electric motorcycle 1 includes a key system having a switch for switching between an on-state and an off-state of the vehicle controller 20. As will be described later, the key cylinder 40 is provided as the key system in the exampled electric motorcycle 1. The on-state refers to a state in which the vehicle controller 20 operates by the power received from the low-voltage battery 21. In the on-state, the vehicle controller 20 calculates a command value (current command value) to be output to the motor driver 22 based on e.g. the accelerator manipulated amount and the vehicle speed sensed through the sensors 23 and 24. The off-state refers to a state in which the vehicle controller 20 does not operate. That is, in the off-state, the vehicle controller 20 does not perform the calculation of the command value based on the accelerator manipulated amount and the vehicle speed.

The key system switches the vehicle controller 20 from the off-state to the on-state according to a first operation on the system by a user. Further, the key system releases the lock of the inlet lid 32 by the lock mechanism 33 according to a second operation on the system by the user. As a result, the user can open the inlet lid 32. As described above, the electric motorcycle 1 in which the lock by the lock mechanism 33 can be released by the key system makes the release operation of the lock easier than a vehicle provided with a key cylinder specializing for the lock mechanism 33, for example. That is, the work for charging the battery 12 may be made easier.

In the exampled electric motorcycle 1, the key system has the rotatable key cylinder 40 (see FIG. 4) into which a key 91 may be inserted. The key cylinder 40 has a main switch 41 (see FIGS. 2 and 4) for switching the vehicle controller 20 between the on-state and the off-state. As shown in FIG. 5, a position P1 in which the vehicle controller 20 is in the on-state and a position P2 in which the vehicle controller 20 is in the off-state are defined in the key cylinder 40. (Hereinafter, "the position P1 in which the vehicle controller 20 is in the on-state" is referred to as "on-position" and "the position P2 in which the vehicle controller 20 is in the off-state" is referred to as "off-position".) As shown in FIG. 2, when the key cylinder 40 is in the on-position P1, the low-voltage battery 21 and the vehicle controller 20 are connected via the main switch 41. At the time, the vehicle controller 20 is in the on-state. On the other hand, when the key cylinder 40 is in the off-position P2, the connection between the low-voltage battery 21 and the vehicle controller 20 is cut off by the main switch 41. At the time, the vehicle controller 20 is in the off-state.

The key cylinder 40 has a lock operation mechanism 42 (see FIG. 4) connected to the lock mechanism 33. The lock operation mechanism 42 releases the lock of the inlet lid 32 by the lock mechanism 33 according to the second operation by the user. In the exampled electric motorcycle 1, a lock release position P3 (see FIG. 5) is defined in the key cylinder 40. When the key cylinder 40 is placed in the lock release position P3, the lock operation mechanism 42 releases the lock of the inlet lid 32 by the lock mechanism 33. When the key cylinder 40 is placed in another position than the lock release position P3, the lock operation mechanism 42 maintains the lock of the inlet lid 32 by the lock mechanism 33. According to the key cylinder 40, the user can open the inlet lid 32 by operating the key cylinder 40 using the key 91. As a result, the charging work of the high-voltage battery 12 may be made easier than that in a vehicle provided with a key cylinder specializing for operation of the lock mechanism 33.

As shown in FIG. 1, for example, the key cylinder 40 is placed close to the steering handle 8. On the other hand, the inlet lid 32 is placed in a position largely apart rearward from the key cylinder 40. It is particularly effective for the convenience of the user that the lock of the inlet lid 32 can be released by the operation of the key cylinder 40.

Note that, to release the lock of the inlet lid 32 is to allow the inlet lid 32 to move from the closed position to the opened position. In an example, when the lock of the inlet lid 32 is released, the inlet lid 32 moves by a force of an elastic member such as a spring, for example, to the opened position in which the charge inlet 31 is exposed. In another example, the elastic member is not provided and, when the lock of the inlet lid 32 is released, the state in which the charge inlet 31 is covered by the inlet lid 32 may be maintained.

The lock operation mechanism 42 is mechanically coupled to the lock mechanism 33. For example, the lock operation mechanism 42 is coupled to the engaging member 33a (see FIG. 3) of the lock mechanism 33 via e.g. a cable 43. When the key cylinder 40 is placed in the lock release position, the lock operation mechanism 42 pulls the cable 43 and releases the lock by the lock mechanism 33. The lock operation mechanism 42 includes e.g. a movable member connected to an end portion of the cable 43 and a cam that moves the movable member by the rotation of the key cylinder 40. The lock operation mechanism 42 may include a lever for pulling the cable 43 by the rotation of the key cylinder 40. When the engaging member 33a and the lock operation mechanism 42 are connected via the cable 43, the engaging member 33a is urged toward the engagement position by an elastic member such as a spring.

As shown in FIG. 5, in the exampled electric motorcycle 1, the off-position P2 is defined between the lock release position P3 and the on-position P1. Accordingly, the rotation direction of the key cylinder 40 from the off-position P2 toward the lock release position P3 is opposite to the rotation direction of the key cylinder 40 from the off-position P2 toward the on-position P1. Thereby, the user may be prevented from erroneously placing the key cylinder 40 in the lock release position P3.

Note that the above described "first operation" is to move the key cylinder 40 from the off-position P2 to the on-position P1 by the key 91. The above described "second operation" is to move the key cylinder 40 from the off-position P2 to the lock release position P3. The second operation is not limited to the example described here. For example, the key cylinder 40 may be moved in an axial direction (D1 directions in FIG. 4). In this case, "second operation" may include an operation of rotating the key cylinder 40 and an operation of pushing the key cylinder 40 with the key 91 inserted into the key cylinder 40. For example, "second operation" may be an operation of pushing the key cylinder 40 with the key 91 inserted into the key cylinder 40, and then, rotating the key cylinder 40 to the lock release position P3.

As yet another example, the lock mechanism 33 provided in the charge inlet 31 and the lock operation mechanism 42 provided in the key cylinder 40 may be electrically coupled. For example, the lock mechanism 33 may have an actuator that moves the engaging member 33a. Further, the key cylinder 40 may have a switch for controlling the actuator. The switch may drive the actuator to release the lock of the lock mechanism 33 when the key cylinder 40 is placed in the lock release position P3.

As yet another example, the electric motorcycle 1 may have a button for moving the engaging member 33a from the engagement position to the non-engagement position. The engaging member 33a may be moved from the engagement position to the non-engagement position when the user presses the button. In this case, the lock mechanism 33 may restrict the movement of the button. (The movement is pressing operation of the button by the user, for example.) According to the structure, the inlet lid 32 may also be locked in the closed position by the lock mechanism 33. In the electric motorcycle 1 provided with the button, when the key cylinder 40 is placed in the lock release position P3, the lock operation mechanism 42 may release the restriction of the movement of the button by the lock mechanism 33.

As shown in FIG. 3, the electric motorcycle 1 may have an illumination device 35 for illuminating the charge inlet 31. The illumination device 35 is attached to e.g. a member around the opening of the charge inlet 31. For example, the illumination device 35 is placed above the charge inlet 31. The illumination device 35 may be attached to the inlet lid 32. The illumination device 35 is formed by e.g. an LED. The illumination device 35 is turned on in response to the key operation (specifically, the above described second operation) by the user. Even when the charge inlet 31 is connected to the charge connector B of the external charger in a dark place, the illumination device 35 enables the connecting work to be easily performed.

It is preferable that the illumination device 35 is automatically turned off. "Automatically turned off" means that an operation for turning off the illumination device 35 is not necessary. For example, the illumination device 35 is turned off after a predetermined time elapses from the start of lighting. Thereby, waste of power consumption of the low-voltage battery 21 may be prevented.

As shown in FIG. 2, the electric motorcycle 1 has a relay 37 and a timer circuit 36 for controlling on/off of the relay 37. The illumination device 35 is connected to the low-voltage battery 21 via the relay 37. The main switch 41 is placed between the timer circuit 36 and the low-voltage battery 21. When the key cylinder 40 is placed in the lock release position P3, the main switch 41 connects the low-voltage battery 21 and the timer circuit 36. Thereby, the timer circuit 36 sets the relay 37 in an on-state (closed state) and starts timing. Then, when the predetermined time elapses from the start of timing, the timer circuit 36 sets the relay 37 in an off-state (opened state). Thereby, the illumination device 35 is turned off.

The configuration for turning on the illumination device 35 and the configuration for automatically turning off the illumination device 35 are not limited to those of the example shown in FIG. 2, but may be appropriately changed. For example, the illumination device 35 may be turned on according to the opening action of the inlet lid 32. For example, the electric motorcycle 1 may have a switch which becomes in an on-state (closed state) when the inlet lid 32 is placed in the opened position and becomes in an off-state (opened state) when the inlet lid 32 is placed in the closed position. The switch connects the illumination device 35 and the low-voltage battery 21 and allows power supply from the low-voltage battery 21 to the illumination device 35 when it is in the on-state, and cuts off the connection between the illumination device 35 and the low-voltage battery 21 and stops power supply from the low-voltage battery 21 to the illumination device 35 when it is in the off-state. According to the configuration, when the user returns the inlet lid 32 to the closed position, the switch is in the off-state and the illumination device 35 is automatically turned off.

As yet another example, the key cylinder 40 may have a switch only for turning on and off the illumination device 35 in addition to the main switch 41. When the key cylinder 40 is placed in the lock release position P3, the switch is in an on-state (closed state) and allows power supply from the low-voltage battery 21 to the illumination device 35. On the other hand, when the key cylinder 40 is placed in the on-position P1 or off-position P2, the switch is in an off-state (opened state) and stops power supply from the low-voltage battery 21 to the illumination device 35.

The electric motorcycle may not have the illumination device 35 or the relay 37 and the timer circuit 36 for moving the illumination device 35. In such an electric motorcycle, when the key cylinder 40 is in the lock release position P3, the main switch 41 may be set in an off-state (opened state). This structure stops driving of the vehicle controller 20 when the key cylinder 40 is in the lock release position P3, i.e., when charging is performed.
(1) As described above, the electric motorcycle 1 includes the electric motor 11 that drives the driving wheel (rear wheel 3), the high-voltage battery 12 that stores power to be supplied to the electric motor 11, the vehicle controller 20 that controls the electric motor 11, the charge inlet 31 electrically connected to the high-voltage battery 12, the openable and closable inlet lid 32 provided on the charge inlet 31, the lock mechanism 33 for locking the inlet lid 32 in the closed position, and the key system (key cylinder 40). The key system has the main switch 41 for switching the vehicle controller 20 from the off-state to the on-state according to the first operation (the rotation operation from the off-position P2 toward the on-position P1 in the example of FIG. 5) by the user, and is configure to release the lock of the inlet lid 32 by the lock mechanism 33 according to the second operation (the rotation operation from the off-position P2 toward the lock release position P3 in the example of FIG. 5) by the user. According to the electric motorcycle 1, the key system for switching the vehicle controller 20 between the on-state and the off-state releases the lock of the inlet lid 32 by the lock mechanism 33. Therefore, the user may release the lock by the lock mechanism 33 by the simpler operation than that in related art, and the charging work of the high-voltage battery 12 may be made easier.
(2) The key system has the key cylinder 40 for insertion of the key 91. Further, the on-position P1 in which the vehicle controller 20 is in the on-state, the off-position P2 in which the vehicle controller 20 is in the off-state, and the lock release position P3 in which the lock of the inlet lid 32 by the lock mechanism 33 is released are set in the key cylinder 40.
(3) Furthermore, the off-position P2 is set between the lock release position P3 and the on-position P1. Thereby, the user may be prevented from erroneously moving the key cylinder 40 toward the lock release position P3.
(4) The electric motorcycle 1 has the illumination device 35 for illuminating the charge inlet 31. The illumination device 35 is turned on according to the operation for releasing the lock by the lock mechanism 33 (the rotation operation from the off-position P2 toward the lock release position P3 in the example of FIG. 5). Further, in another exampled electric motorcycle 1, the illumination device 35 is turned on according to the opening action of the inlet lid 32. Thereby, the charging work in a dark place may be made easier.
(5) The illumination device 35 is automatically turned off. Thereby, waste of power consumption may be prevented.
(6) In the exampled electric motorcycle 1, the illumination device 35 is turned off after the predetermined time elapses from the start of lighting. In another example, the illumination device 35 is turned off according to the closing action of the inlet lid 32. Thereby, waste of power consumption may be prevented.

The electric saddled vehicle proposed in this disclosure is not limited to the above described electric motorcycle 1, but various changes may be made.

For example, the electric motorcycle may have the so-called keyless entry system as the key system. That is, the electric motorcycle may have a key system having a portable device with a transmitter provided therein and an authentication device for authentication of the portable device based on identification information transmitted from the portable device in place of the above described key cylinder 40. The authentication device may set the vehicle controller 20 in the on-state when the portable device is authenticated as being appropriate. Such an electric motorcycle may include a lock release button for releasing the lock of the inlet lid 32 by the lock mechanism 33. When the user presses the lock release button after the authentication device authenticates the portable device as being appropriate, the lock of the inlet lid 32 by the lock mechanism 33 may be released. In the electric motorcycle like this, the above described "first operation" is that the user carries the portable device and approaches the electric motorcycle and the above described "second operation" is that the user presses the lock release button.

## Claims

1. An electric saddled vehicle comprising:
an electric motor (11) that drives a driving wheel (3);
a battery (12) that stores power to be supplied to the electric motor (11);
a controller (20) that controls the electric motor (11);
a charge inlet (31) electrically connected to the battery (12);
an openable and closable inlet lid (32) provided on the charge inlet (31); and
a key system having a switch for switching the controller (20) from an off-state to an on-state according to a first operation by a user, **characterized by**
a lock mechanism (33) for locking the inlet lid (32) in a closed position, wherein the key system is configured to release lock of the inlet lid (32) by the lock mechanism (33) according to a second operation by the user.

2. The electric saddled vehicle according to claim 1, **characterized in that** the key system has a key cylinder (40) for insertion of a key (91), and
a first position (P1) in which the controller (20) is in the on-state, a second position (P2) in which the controller (20) is in the off-state, and a third position (P3) in which the lock of the inlet lid (32) by the lock mechanism (33) is released are defined in the key cylinder (40).

3. The electric saddled vehicle according to claim 2, **characterized in that** the second position (P2) is set between the third position (P3) and the first position (P1).

4. The electric saddled vehicle according to claim 1, **characterized by** an illumination device (35) for illuminating the charge inlet (31),
wherein the illumination device (35) is turned on according to the second operation or an opening action of the inlet lid (32).

5. The electric saddled vehicle according to claim 4, **characterized in that** the illumination device (35) is automatically turned off.

6. The electric saddled vehicle according to claim 5, **characterized in that** the illumination device (35) is turned off after a predetermined time elapses from the start of lighting or according to a closing action of the inlet lid (32).

## Patentansprüche

1. Ein Elektro-Sattel-Fahrzeug, das umfasst:
einen Elektro-Motor (11), der ein Antriebs-Rad (3) antreibt;
eine Batterie (12), die Energie speichert, die dem Elektro-Motor (11) zuzuführen ist;
eine Steuerung (20), die den Elektro-Motor (11) steuert;
einen Lade-Eingang (31), der elektrisch mit der Batterie (12) verbunden ist;
einen zu öffnenden und zu schließenden Einlass-Deckel (32), der am Lade-Eingang (31) vorgesehen ist; und
ein Schlüssel-System, das einen Schalter hat, zum Umschalten der Steuerung (20) von einem Aus-Zustand in einen Ein-Zustand gemäß einer ersten Betätigung durch einen Benutzer, **gekennzeichnet durch**
einen Verriegelungs-Mechanismus (33) zum Verriegeln des Einlass-Deckels (32) in einer geschlossenen Position, wobei das Schlüssel-System konfiguriert ist, um die Verriegelung des Einlass-Deckels (32) durch den Verriegelungs-Mechanismus (33) gemäß einer zweiten Betätigung durch den Benutzer löst.

2. Das Elektro-Sattel-Fahrzeug gemäß Anspruch 1, **dadurch gekennzeichnet, dass** das Schlüssel-System einen Schlüssel-Zylinder (40) zum Einstecken eines Schlüssels (91) hat, und
eine erste Position (P1), in der die Steuerung (20) im Ein-Zustand ist, eine zweite Position (P2), in der die Steuerung (20) im Aus-Zustand ist, und eine dritte Position (P3), in der die Verriegelung des Einlass-Deckels (32) durch den Verriegelungs-Mechanismus (33) gelöst ist, im Schlüssel-Zylinder (40) definiert sind.

3. Das Elektro-Sattel-Fahrzeug gemäß Anspruch 2, **dadurch gekennzeichnet, dass** die zweite Position (P2) zwischen der dritten Position (P3) und der ersten Position (P1) gesetzt ist.

4. Das Elektro-Sattel-Fahrzeug gemäß Anspruch 1, **gekennzeichnet durch** eine Beleuchtungs-Vorrichtung (35) zur Beleuchtung des Lade-Eingangs (31),
wobei die Beleuchtungs-Vorrichtung (35) in Abhängigkeit von der zweiten Betätigung oder einer Öffnungsaktion des Einlass-Deckels (32) eingeschaltet ist.

5. Das Elektro-Sattel-Fahrzeug gemäß Anspruch 4, **dadurch gekennzeichnet, dass** die Beleuchtungs-Vorrichtung (35) automatisch ausgeschaltet ist.

6. Das Elektro-Sattel-Fahrzeug gemäß Anspruch 5, **dadurch gekennzeichnet, dass** die Beleuchtungs-Vorrichtung (35) nach Ablauf einer vorbestimmten Zeit ab Beginn der Beleuchtung oder in Abhängigkeit von einem Schließvorgang des Einlass-Deckels (32) abgeschaltet ist.

## Revendications

1. Véhicule électrique à selle comprenant :
un moteur électrique (11) qui entraîne une roue d'entraînement (3) ;
une batterie (12) qui stocke de l'énergie à fournir au moteur électrique (11) ;
un dispositif de commande (20) qui commande le moteur électrique (11) ;
une entrée de charge (31) connectée électriquement à la batterie (12) ;
un couvercle d'entrée (32) pouvant être ouvert et fermé agencé sur l'entrée de charge (31) ; et
un système à clé ayant un commutateur pour commuter le dispositif de commande (20) d'un état désactivé à un état activé en fonction d'une première opération par un utilisateur, **caractérisé par**
un mécanisme de verrouillage (33) pour verrouiller le couvercle d'entrée (32) dans une position fermée, dans lequel le système à clé est configuré pour libérer le verrouillage du couvercle d'entrée (32) par le mécanisme de verrouillage (33) en fonction d'une seconde opération par l'utilisateur.

2. Véhicule électrique à selle selon la revendication 1, **caractérisé en ce que** le système à clé comporte un barillet à clé (40) pour l'insertion d'une clé (91), et
une première position (P1) dans laquelle le dispositif de commande (20) est dans l'état activé, une deuxième position (P2) dans laquelle le dispositif de commande (20) est dans l'état désactivé, et une troisième position (P3) dans laquelle est libéré le verrouillage du couvercle d'entrée (32) par le mécanisme de verrouillage (33) sont définies dans le barillet à clé (40).

3. Véhicule électrique à selle selon la revendication 2, **caractérisé en ce que** la deuxième position (P2) est établie entre la troisième position (P3) et la première position (P1).

4. Véhicule électrique à selle selon la revendication 1, **caractérisé par** un dispositif d'éclairage (35) pour éclairer l'entrée de charge (31),
dans lequel le dispositif d'éclairage (35) est activé en fonction de la seconde opération ou d'une action d'ouverture du couvercle d'entrée (32).

5. Véhicule électrique à selle selon la revendication 4, **caractérisé en ce que** le dispositif d'éclairage (35) est automatiquement désactivé.

6. Véhicule électrique à selle selon la revendication 5, **caractérisé en ce que** le dispositif d'éclairage (35) est désactivé après qu'un temps prédéterminé s'est écoulé depuis le début de l'éclairage ou en fonction d'une action de fermeture du couvercle d'entrée (32).
